Europäisches Patentamt

European Patent Office

Office européen des brevets

(11) Numéro de publication: **0 402 240**
**A1**

## (12) DEMANDE DE BREVET EUROPEEN

(21) Numéro de dépôt: 90401524.5

(22) Date de dépôt: 06.06.90

(51) Int. Cl.5: **H02K 7/08, H02K 5/173**

(30) Priorité: 08.06.89 FR 8907604

(43) Date de publication de la demande:
**12.12.90 Bulletin 90/50**

(84) Etats contractants désignés:
**AT BE CH DE ES FR GB GR IT LI NL SE**

(71) Demandeur: **R.K.S.**
**Route de Vassey, B.P. 116**
**F-89200 Avallon(FR)**

(72) Inventeur: **Bourgeois-Jacquet, Pierre**
**15, avenue des Chaumottes**
**F-89200 Avallon(FR)**

(74) Mandataire: **Casalonga, Axel et al**
**BUREAU D.A. CASALONGA - JOSSE**
**Morassistrasse 8**
**D-8000 München 5(DE)**

(54) **Couronne d'orientation à moteur intégré.**

(57) Couronne d'orientation à moteur de rotation intégré, comprenant deux bagues montées (1, 2) en rotation l'une par rapport à l'autre par au moins une rangée d'éléments roulants (3, 4), et un moteur de rotation dont la partie statorique (14) est fixée à l'une des bagues (2) et la partie rotorique (13) à l'autre bague (1) de la couronne.

La couronne comprend deux rangées espacées d'éléments roulants (3, 4) entre les deux bagues (1, 2) et le moteur (13, 14) est disposé entre lesdites deux rangées d'éléments roulants (3, 4).

## FIG.1

## COURONNE D'ORIENTATION A MOTEUR INTEGRE.

La présente invention se rapporte à une couronne d'orientation à moteur intégré, comprenant deux bagues montées en rotation l'une par rapport à l'autre par au fins une rangée d'éléments roulants, et un moteur de rotation dont la partie statorique est fixée à l'une des bagues et la partie rotorique à l'autre bague de la couronne.

Sur les couronnes d'orientation usuelles, l'une des deux bagues comporte généralement une denture périphérique en prise avec un pignon entraîné par un moteur.

Les principaux inconvénients de ces couronnes d'orientation connues consistent dans la faible précision d'orientation, compte tenu du jeu de fonctionnement de l'ensemble de la chaîne cinématique, jeu qui augmente avec l'usure des dentures, et dans les limitations imposées du point de vue accélération par la présence des dentures.

On a également déjà proposé (demande de brevet DE-A-22 01 145, demande de brevet DE-A-32 13 172, demande de brevet EP-A-0 245 590, demande de brevet EP-A-0245 749) d'intégrer directement un moteur électrique à une couronne d'orientation, la partie statorique du moteur étant fixée à l'une des bagues et la partie rotorique à l'autre bague de la couronne, ce qui assure un entraînement direct de l'une des bagues par rapport à l'autre par le moteur intégré. Cependant, sur ces couronnes d'orientation connues à moteur intégré, le moteur électrique est disposé d'un côté de la ou des rangées d'éléments roulants de la couronne, c'est-à-dire en porte-à-faux par rapport à la ou les rangées d'éléments roulants. Par conséquent, tout mouvement relatif des deux bagues de la couronne sous l'effet du jeu entre les pistes de roulement et les éléments roulants, se traduit par un mouvement relatif amplifié entre le stator et le rotor du moteur, d'où une variation de l'entrefer du moteur entraînant une dégradation des caractéristiques du moteur, notamment du point de vue du couple. Pour tenir compte de cette variation d'entrefer, il est nécessaire de choisir d'avance un entrefer relativement important, au détriment des caractéristiques du moteur. Par ailleurs, compte de leur capacité de charge, ces couronnes d'orientation connues à moteur intégré sont relativement encombrantes. De plus, le moteur en porte-à-faux n'est pas ou est mal protégé. Enfin, sur les couronnes d'orientation suivant la plupart des documents précités, le stator et le rotor du moteur sont fixés à des pièces de support elle-mêmes fixées par vis aux bagues, ce qui entraîne, entre les bagues et les parties du moteur, des interfaces qui altèrent la précision de rotation non seulement à la fabrication et au montage, mais également sous les efforts qui interviennent pendant le fonctionnement et qui peuvent provoquer un déplacement relatif des pièces les unes par rapport aux autres, provoquant ainsi une variation supplémentaire de l'entrefer du moteur.

La présente invention a pour objet une couronne d'orientation à moteur intégré dans laquelle les jeux de fonctionnement de la couronne sont pratiquement sans influence sur les performances du moteur. L'invention a également pour objet une couronne d'orientation à moteur intégré qui, pour la même capacité de charge, soit moins encombrante que les couronnes d'orientation connues. L'invention a par ailleurs pour objet une couronne d'orientation à moteur intégré sur laquelle le moteur est parfaitement protégé. Enfin, l'invention a pour objet une couronne d'orientation à moteur intégré sur laquelle les effets de charges importantes sont pratiquement sans influence sur le comportement du moteur.

La couronne d'orientation conforme à l'invention à moteur de rotation intégré comprend deux bagues montées en rotation l'une par rapport à l'autre par au moins une rangée d'éléments roulants, et un moteur de rotation dont la partie statorique est fixée à l'une des bagues et la partie rotorique à l'autre bague de la couronne. Selon l'invention, la couronne d'orientation comprend deux rangées espacées d'éléments roulants, et le moteur est disposé entre les deux rangées d'éléments roulants de la couronne.

Les deux rangées d'éléments roulants peuvent être espacées l'une de l'autre radialement, le moteur étant alors du type à entrefer radial, ou être espacé axialement, le moteur étant alors du type à entrefer axial.

Dans ce dernier cas, les deux rangées d'éléments roulants peuvent, suivant un mode de réalisation préféré de l'invention, être espacées non seulement axialement, mais également radialement, c'est-à-dire que les deux rangées d'éléments roulants ont des diamètres différents, chacune des deux bagues de la couronne pouvant être une bague monobloc.

En effet, grâce à cet espacement à la fois axial et radial des deux rangées d'éléments roulants, les deux bagues monoblocs peuvent être montées et démontées avec les parties de moteur qui s'y trouvent fixées.

De préférence, les éléments roulants des deux rangées sont à contact oblique à angles de contact divergents (disposition en 0).

Dans le cadre de l'invention, les éléments roulants peuvent être des billes à contact oblique et/ou des rouleaux à axes de rotation inclinés par rapport à l'axe de la couronne.

Le moteur intégré à la couronne peut être de préférence un moteur électrique, mais d'autres types de moteurs peuvent être envisagés dans le cadre de l'invention.

Pour des applications nécessitant un positionnement angulaire précis, le moteur de rotation peut être avantageusement constitué par un moteur pas à pas.

En se référant aux dessins schématiques annexés, on va décrire ci-après plus en détail deux modes de réalisation illustratifs et non limitatifs d'une couronne d'orientation conforme à l'invention à moteur de rotation intégré; sur les dessins :

la figure 1 est une demi-coupe axiale d'une couronne d'orientation à deux rangées de rouleaux cylindriques;

la figure 2 est une demi-coupe axiale d'une couronne d'orientation à deux rangées de billes à contact oblique.

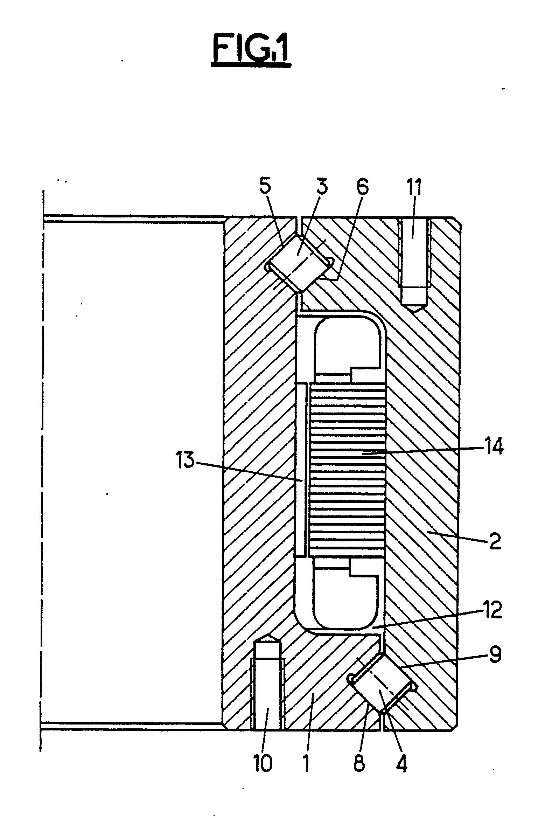

La couronne d'orientation illustrée par la figure 1 comprend une bague intérieure 1 et une bague extérieure 2, chacune des deux bagues 1 et 2 étant une bague monobloc ayant un profil sensiblement en L, les deux bagues 1 et 2 étant emboîtées en position inversée l'une dans l'autre. Une première rangée de rouleaux cylindriques 3 est disposée entre l'extrémité libre de la branche verticale de la bague intérieure 1 et l'extrémité libre de la branche horizontale de la bague extérieure 2. Une seconde rangée de rouleaux cylindriques 4 est disposée entre l'extrémité libre de la branche horizontale de la bague intérieure 1 et l'extrémité libre de la branche verticale de la barre extérieure 2. Les rouleaux 3 de la première rangée roulent sur une piste 5 de la bague intérieure 1 et sur une piste 6 de la bague extérieure 2, tandis que les rouleaux 4 de la seconde rangée roulent sur une piste 7 de la bague intérieure et une piste 8 de la bague extérieure 2. Les rouleaux 3 et 4 des deux rangées sont inclinés à 45° par rapport à l'axe de rotation de la couronne suivant une disposition dite en 0 (angles de contact divergents).

La bague intérieure 10 est munie à son extrémité inférieure d'un cercle de trous 10 taraudés en vue de sa fixation sur l'une des deux pièces dont la couronne d'orientation assure le montage en rotation l'une par rapport à l'autre. De son côté, la bague extérieure 2 est munie, à son extrémité supérieure, d'un cercle de trous 11 taraudés en vue de sa fixation à l'autre desdites pièces.

Dans l'espace intérieur 12 que les deux bagues 1 et 2 délimitent entre elles sur tout le pourtour de la couronne est disposé un moteur électrique comprenant une partie rotorique 13 fixée à la bague intérieure 1 et une partie statorique 14 fixée à la bague extérieure 2.

On reconnaît sur la figure que grâce aux diamètres différents des deux rangées de rouleaux 3 et 4, les deux bagues 1 et 2 peuvent être montées et démontées, avec les parties de moteur 13, 14 qui y sont fixées, par simple emboîtement et déboîtement suivant l'axe de la couronne. Bien entendu, pour permettre ce montage et démontage, les rouleaux 3 et 4 doivent être retirés de façon usuelle d'entre les deux bagues 1 et 2.

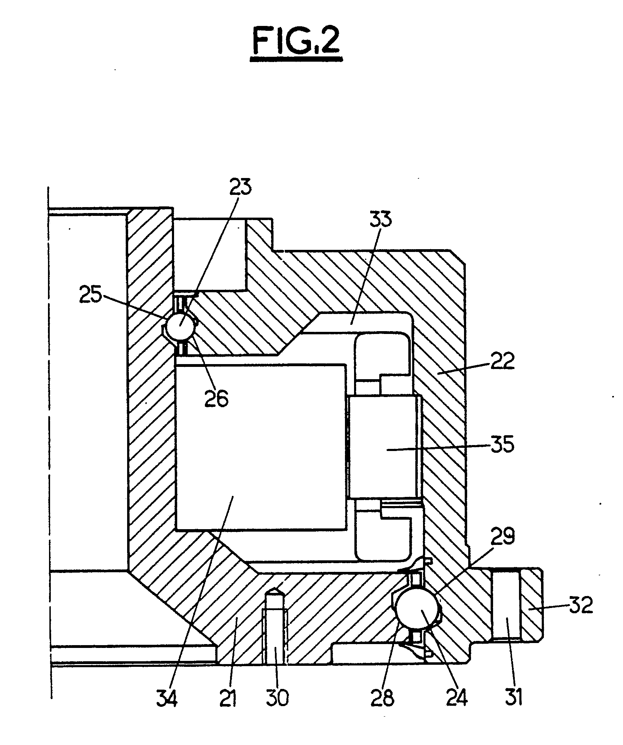

Dans le mode de réalisation suivant la figure 2, la couronne d'orientation comprend une bague intérieure 21 et une bague extérieure 22 ayant également une forme générale en L et emboîtées l'une dans l'autre en position inversée. Deux rangées d'éléments roulants 23, 24 constitués par des billes à contact oblique sont disposées entre les deux bagues 21 et 22. Les billes 23 de la première rangée roulent entre une piste 25 au voisinage de l'extrémité libre de la branche verticale de la bague intérieure 21 et une piste 26 à l'extrémité libre de la branche horizontale de la bague extérieure 22. Les billes 24 de la seconde rangées roulent entre une piste 28 à l'extrémité libre de la branche horizontale de la bague intérieure 21 et une piste 29 à l'extrémité libre de la branche verticale de la bague extérieure 22.

Les deux rangées de billes 23, 24 à contact oblique sont également en disposition en 0 (angles de contact divergents).

La bague intérieure 21 comporte à son extrémité intérieure un cercle de trous taraudés 30 en vue de sa fixation, tandis que la bagues extérieure 22 comporte un cercle de trous 31 dans une collerette extérieure 32 formée à l'extrémité inférieure de la bague extérieure 22.

Dans l'espace intérieur 33 délimité entre les deux bagues 21, 22 emboîtées l'une dans l'autre est disposé un moteur électrique dont la partie rotorique 34 est fixée à la bague intérieure 21 et la partie statorique 35 à la bague extérieure 22.

Dans ce mode de réalisation également, les deux bagues monoblocs 21, 22 peuvent être montées et démontées, avec les parties de moteur 34, 35 qui y sont fixées, par simple emboîtement et déboîtement suivant l'axe de la couronne, les billes 23, 24 des deux rangées étant retirées de façon connue en soi.

Il va de soi que les modes de réalisation décrits ci-dessus et illustrés par les dessins annexés n'ont été donnés qu'à titre d'exemples indicatifs et non limitatifs et que de nombreuses modifications et variantes sont possibles dans le cadre de l'invention.

Ainsi, le moteur intégré à la couronne d'orientation, entre les deux rangées d'éléments roulants, peut être non seulement un moteur électrique, par exemple un moteur pas à pas, mais également un moteur hydraulique, pneumatique, etc.

Les deux rangées d'éléments roulants, au lieu d'avoir des diamètres différents, pourraient également avoir les mêmes diamètres, mais il serait nécessaire dans ce cas de diviser l'une des deux bagues pour permettre le montage et démontage de ces dernières et des parties du moteur.

Par ailleurs, au lieu d'être à entrefer axial, le moteur pourrait également à entrefer radial dans le cas d'une couronne d'orientation du type butée axiale, avec deux rangées d'éléments roulants sensiblement concentriques encadrant la partie moteur à entrefer radial.

Dans le cadre de l'invention, les deux rangées d'éléments roulant pourraient avoir des angles de contact différents en fonction des efforts à transmettre (charges radiales, charges axiales, moments de renversement).

**Revendications**

1. Couronne d'orientation à moteur de rotation intégré, comprenant deux bagues montées en rotation l'une par rapport à l'autre par au moins une rangée d'éléments roulants, et un moteur de rotation dont la partie statorique est fixée à l'une des bagues et la partie rotorique à l'autre bague de la couronne, caractérisée par le fait qu'elle comprend deux rangées d'éléments roulants (3, 4; 23, 24) espacés axialement et présentant des diamètres différents, chacune des deux bagues (1, 2; 21, 22) étant monobloc7 et que le moteur (13, 14; 34, 35) est disposé entre lesdites deux rangées d'éléments roulants.

2. Couronne suivant la revendication 1, caractérisée par le fait que les éléments roulants (3, 4; 23, 24) des deux rangées sont à contact oblique et à disposition en 0 (angles de contact divergents).

3. Couronne suivant l'une quelconque des revendications précédentes, caractérisée par le fait que les éléments roulants sont constitués par des rouleaux.

4. Couronne suivant l'une quelconque des revendications précédentes, caractérisée par le fait que les éléments roulants sont constitués par des billes.

5. Couronne suivant l'une quelconque des revendications précédentes, caractérisée par le fait que le moteur intégré est un moteur électrique.

6. Couronne suivant la revendication 5, caractérisée par le fait que le moteur est un moteur électrique pas à pas.

EP 0 402 240 A1

# FIG.1

# FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 465 951 (J.F. DALBY)<br>* colonne 6, lignes 13-21; colonne 4, lignes 21-62; figure 4 *<br>--- | 1,3-5 | H 02 K 7/08<br>H 02 K 5/173 |
| A | GB-A-2 202 386 (YOKOGAWA ELECTRIC CORP.)<br>* résumé; page 4, lignes 1-27; figure 1 *<br>--- | 1,2,5 | |
| A | EP-A-0 289 135 (SEAGATE TECHNOLOGY, INC.)<br>* colonne 4, lignes 3-28; figure 2 *<br>----- | 1,3-6 | |

DOMAINES TECHNIQUES
RECHERCHES (Int. Cl.5)

H 02 K 7/00
H 02 K 5/00

Le présent rapport a été établi pour toutes les revendications

| Lieu de la recherche | Date d'achèvement de la recherche | Examinateur |
|---|---|---|
| BERLIN | 27-08-1990 | WEIHS J.A. |

EPO FORM 1503 03.82 (P0402)